(19) **Europäisches Patentamt**

**European Patent Office**

**Office européen des brevets**

(11) **EP 0 615 374 B1**

(12) **FASCICULE DE BREVET EUROPEEN**

(45) Date de publication et mention
de la délivrance du brevet:
**31.05.2000 Bulletin 2000/22**

(51) Int. Cl.⁷: **H04M 9/08**

(21) Numéro de dépôt: **94400464.7**

(22) Date de dépôt: **04.03.1994**

(54) **Procédé et dispositif de traitement d'écho entre deux voies de transmission présentant entre elles un couplage**

Verfahren und Vorrichtung zur Verarbeitung von Echosignalen zwischen zwei Übertragungswegen mit gegenseitiger Kopplung

Process and apparatus for echo processing between two mutually coupled transmission paths

(84) Etats contractants désignés:
**DE GB IT**

(30) Priorité: **08.03.1993 FR 9302656**

(43) Date de publication de la demande:
**14.09.1994 Bulletin 1994/37**

(73) Titulaire: **FRANCE TELECOM**
**75015 Paris (FR)**

(72) Inventeurs:
• **Le Scan, Patrice**
**F-38190 Bernin (FR)**
• **Closse, Etienne**
**F-38000 Grenoble (FR)**
• **Joanblanq, Christophe**
**F-38660 La Terrasse (FR)**

(74) Mandataire: **Casalonga, Axel**
**BUREAU D.A. CASALONGA - JOSSE**
**Morassistrasse 8**
**80469 München (DE)**

(56) Documents cités:
**WO-A-91/03116** **US-A- 4 126 770**

• **IEEE GLOBAL TELECOMMUNICATIONS CONFERENCE vol. 1/3 , 28 Novembre 1983 , SAN DIEGO, CA - USA pages 16.2.1 - 16.2.7 O.A.HORNA 'Echo Control in Teleconferencing'**
• **IEEE JOURNAL OF SOLID-STATE CIRCUITS vol. 24, no. 6 , Décembre 1989 , NEW YORK US pages 1639 - 1646 XP100496 W. HSU ET AL. 'An Acoustic Echo Canceler'**
• **PATENT ABSTRACTS OF JAPAN vol. 013, no. 038 (E-709)27 Janvier 1989 & JP-A-63 234 732 (MATSUSHITA ELECTRIC IND. CO. LTD.) 30 Septembre 1988**

## Description

L'invention concerne le traitement d'écho entre deux voies de transmission présentant entre elles un couplage, notamment acoustique.

L'invention s'applique avantageusement mais non limitativement à la suppression d'un écho acoustique dans un poste téléphonique ou autre terminal téléphonique du type mains libres. Un tel écho est en effet produit par la réflexion sur les parois de la pièce dans laquelle est situé le téléphone mains libres, du signal acoustique émis par le haut-parleur de ce téléphone et provenant du signal de parole de l'interlocuteur distant. Ce signal acoustique réfléchi est réémis sur la ligne téléphonique par l'intermédiaire du microphone du téléphone. L'interlocuteur distant entend donc en conséquence une deuxième fois ses propres paroles ce qui est d'autant plus désagréable que le retard apporté par la ligne de transmission est important.

On connaît déjà des dispositifs de traitement d'écho, destinés à s'insérer dans le poste téléphonique entre la ligne de réception et la ligne d'émission, par exemple par l'article de HORNA "Echo Control in Teleconferencing", IEEE GLOBAL TELECOMMUNICATIONS CONFERENCE, vol 1/3, 28 Novembre 1983, pages 16.2.1-16.2.7, ou par le brevet américain N° 4 126 770, ou encore par la demande de brevet français n° 2 651 077. De tels dispositifs de traitement d'écho utilisent une technique d'identification adaptative qui réalise une annulation d'écho par soustraction d'un écho estimé à partir d'un modèle du couplage acoustique. En d'autres termes, on détermine l'écho estimé, à partir du signal reçu sur l'une des voies et du couplage estimé entre celles-ci, par un filtrage transversal numérique auto-adaptatif cadencé à une fréquence d'horloge prédéterminée.

Le brevet américain N° 4 126 770 concerne un dispositif de suppression d'écho dans un circuit de téléphone utilisant un filtrage adaptatif. Cependant, ce document est uniquement axé sur la production d'un coefficient variable pour moduler le calcul des coefficients du filtre, ainsi que sur un circuit spécifique permettant de détecter si le signal reçu excède un seuil prédéterminé, et il n'est fourni aucune précision quant à la réalisation des moyens de traitement du filtrage auto-adaptatif.

La mise en oeuvre d'une technique de filtrage transversal numérique auto-adaptatif nécessite d'exécuter séquentiellement une équation d'adaptation pour le calcul des coefficients du filtre et une équation de convolution pour le calcul de l'écho estimé. Classiquement, l'ensemble de ces opérations est effectué sur un processeur de traitement du signal qui utilise un opérateur de calcul effectuant multiplications et additions, associé à une structure de mémorisation du type mémoire vive statique. Or, l'utilisation maximale des capacités des opérateurs arithmétiques du processeur de traitement du signal nécessite des accès simultanés en mémoire, ce qui se traduit soit par des mémoires à double accès soit par un partitionnement de la structure de mémorisation. Or, une telle structure se révèle relativement encombrante au niveau de la réalisation du circuit intégré ce qui influe directement sur le coût de fabrication.

Par ailleurs, l'amélioration de la qualité acoustique nécessite une atténuation plus forte de l'écho, ce qui peut s'effectuer en augmentant la longueur du chemin d'écho modélisé, c'est-à-dire en augmentant le nombre de points de la convolution. Aussi, à moins d'augmenter fortement la puissance de calcul du processeur de traitement du signal, il apparaît alors inévitable d'effectuer en plusieurs cycles d'horloge (cycles de base machine) un calcul d'adaptation d'un coefficient de filtre et un calcul élémentaire de la convolution, comme c'est le cas dans l'article de HORNA précité.

L'invention vise à apporter une solution plus satisfaisante à ces problèmes.

Un but de l'invention est de proposer une architecture matérielle permettant de s'affranchir du calcul et du décodage des adresses inhérents aux mémoires vives tout en offrant un encombrement minimum.

L'invention a également pour but d'offrir une vitesse de traitement élevée tout en n'utilisant pas de processeur de traitement du signal.

L'invention propose donc tout d'abord un procédé de traitement d'écho entre deux voies de transmission présentant entre elles un couplage, comportant la détermination d'un écho estimé, à partir du signal reçu sur l'une des voies et du couplage estimé entre les voies, par un filtrage transversal numérique auto-adaptatif cadencé à une fréquence d'horloge prédéterminée; selon une caractéristique générale de l'invention, à chaque cycle d'horloge, on effectue à la fois un calcul d'adaptation d'un coefficient de filtre et un calcul élémentaire de la convolution entre le signal reçu et la réponse impulsionnelle représentée par les coefficients du filtre.

L'invention propose également un dispositif de traitement d'écho entre deux voies de transmission présentant entre elles un couplage, comportant des moyens de filtrage transversal numérique autoadaptatif aptes à délivrer un écho estimé à partir du signal reçu sur l'une des voies et du couplage estimé entre les voies; selon une caractéristique générale de l'invention ce dispositif comporte un premier moyen de stockage à accès séquentiel simultané en écriture et en lecture rebouclé sur lui-même, en particulier une ligne à retard dynamique, apte à stocker les échantillons temporels de signal reçu, ainsi qu'un deuxième moyen de mémoire à accès séquentiel simultané en écriture et en lecture, par exemple une ligne à retard dynamique, apte à stocker les coefficients temporels du filtre.

Les moyens de filtrage comprennent

- des moyens d'adaptation des coefficients du filtre comportant un premier multiplexeur dont une entrée est reliée à la sortie du premier moyen de mémoire et dont une autre entrée est apte à recevoir un coefficient de gain, un deuxième multiplexeur dont une première entrée est reliée à la sortie d'un multiplieur, les deux entrées du multiplieur étant reliées aux deux sorties des premier et deuxième multiplexeurs, ainsi qu'un additionneur dont les deux entrées sont respectivement reliées à la sortie du multiplieur et à la sortie du deuxième moyen de mémoire, la sortie de l'additionneur formant la sortie des moyens d'adaptation, ainsi que

- des moyens de convolution comportant un multiplieur relié en entrée à la sortie du premier moyen de mémoire et à la sortie des moyens d'adaptation, et un additionneur connecté entre la sortie du multiplieur et une deuxième entrée du deuxième multiplexeur des moyens d'adaptation, la sortie de l'additionneur formant la sortie des moyens de convolution. Le dispositif selon l'invention comporte également des moyens de soustraction entre l'écho réel et l'écho estimé aptes à délivrer un signal d'erreur, la sortie des moyens de soustraction étant reliée à l'entrée des moyens d'adaptation et par le lait que les moyens d'adaptation, de convolution, de soustraction ainsi que les deux moyens de mémoire sont commandés au rythme d'un même signal d'horloge.

Les moyens de soustraction et les moyens de convolution comportent avantageusement des éléments communs formés d'un additionneur et d'un registre.

D'autres avantages et caractéristiques de l'invention apparaîtront à l'examen de la description d'un mode de réalisation nullement limitatif de l'invention illustré sur les dessins annexés sur lesquels :

- la figure 1 est un synoptique schématique d'un dispositif de traitement d'écho selon l'invention,
- la figure 2 illustre plus en détail la structure matérielle d'un tel dispositif,
- la figure 3 illustre un diagramme temporel d'horloge,
- les figures 4 à 6 permettent d'illustrer la succession des opérations effectuées dans le dispositif selon l'invention, et
- la figure 7 illustre un point mémoire d'une ligne à retard dynamique.

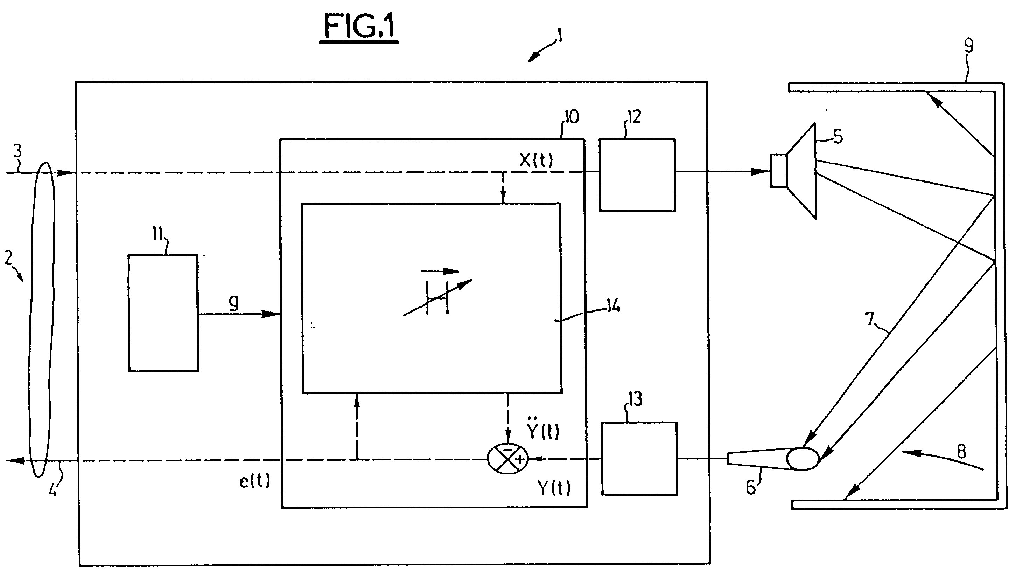

Tel qu'illustré sur la figure 1, le dispositif de traitement 1 s'insère dans le poste téléphonique entre la ligne téléphonique 2 (comportant une voie de réception 3 et d'émission 4), le haut-parleur 5 (disposé à l'extrémité de la voie de réception 3), et le microphone 6 (disposé à l'extrémité de la voie d'émission 4). Le poste téléphonique étant placé, dans un local 9, le signal acoustique capté par le microphone 6 est composé d'un signal d'écho acoustique réel 7 et/ou un signal de parole 8 émis par le locuteur local.

Le dispositif 1 comporte un bloc de traitement 10 recevant en entrée des échantillons temporels x(t) du signal reçu X(t) sur la voie 3 et délivrant en sortie sur la voie 4 un signal d'erreur e(t) qui, après traitement d'écho, ne contient que le signal de parole émis par le locuteur local débarrassé de l'écho résultant de la réflexion du signal acoustique émis par le haut-parleur 5 et provenant du signal de parole prononcé par l'interlocuteur distant.

La détermination de ce signal d'erreur e(t) est obtenue également à partir du signal Y(t) reçu par le microphone 6 après passage dans un convertisseur analogique/numérique 13. Bien entendu, un convertisseur numérique/analogique 12 est prévu entre la sortie du bloc de traitement située sur la voie 3 et l'entrée du haut-parleur 5.

La détermination de l'écho estimé $\ddot{Y}(t)$ nécessite l'utilisation de moyens de filtrage transversal numérique auto-adaptatif 14. Ces moyens de filtrage 14 sont pilotés par un paramètre g représentatif d'un gain, et délivré par un circuit de contrôle 11. La valeur de ce paramètre g contrôle la vitesse d'adaptation du filtre et, lorsqu'elle est égale à zéro, bloque cette dernière. En fait, il s'est avéré préférable de bloquer l'adaptation du filtre c'est-à-dire de délivrer une valeur nulle du paramètre g, en présence d'une parole émise par le locuteur local, et donc de n'effectuer des calculs d'adaptation que dans les moments d'absence de parole locale. Le circuit 11 comprend donc des moyens de détection de la parole locale tels que ceux décrits dans la demande de brevet français n° 2 651 077.

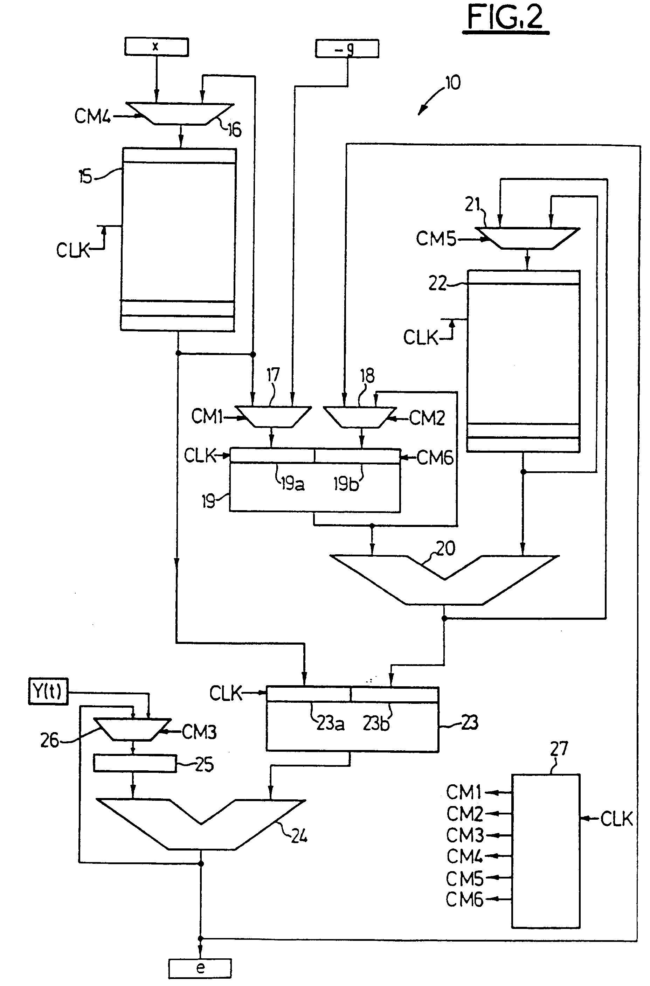

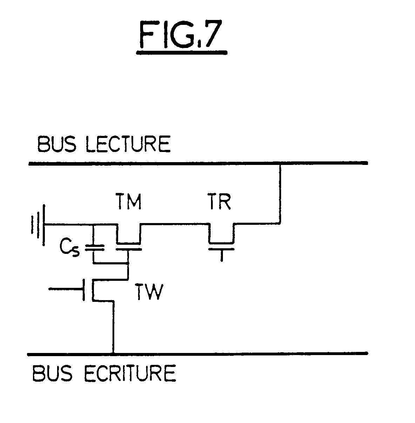

La figure 2 illustre plus en détail le bloc de traitement 10 réalisé de façon câblée. Celui-ci comporte deux moyens de mémoire 15 et 22, à accès séquentiel simultané en écriture et en lecture. Ces moyens sont par conséquent exempts de systèmes d'adressage tels que ceux habituellement associés aux mémoires vives. On pourrait utiliser à cet effet une mémoire du type premier entré - premier sorti (FIFO: First In - First Out en langue anglaise), ou bien par exemple des lignes à retard de longueur prédéterminée avantageusement utilisables en registre à décalage. Bien qu'il soit possible de réaliser de telles lignes à retard à partir d'une succession de bascules D connectées en série et commandées par la même horloge, chaque bascule D étant constituée d'une dispositif d'échantillonnage suivi d'un dispositif bistable de stockage de l'information, il est préférable, pour des raisons d'encombrement, de prévoir des lignes à retard dynamiques c'est-à-dire à base de cellules mémoires dynamiques (point mémoire) comportant une capacité de stockage Cs et trois transistors TM, TR, TW avec éventuellement un bus commun en écriture et en lecture (figure 7).

La première ligne à retard 15 est reliée à l'entrée recevant les échantillons temporels x(t) du signal X reçu sur la voie 3, par l'intermédiaire d'un multiplexeur 16 commandé par un signal de commande CM4 (figure 2). Cette première ligne à retard 15 est rebouclée sur elle-même c'est-à-dire que sa sortie est reliée à son entrée par l'intermédiaire d'une deuxième entrée du multiplexeur 16. Le décalage des données contenues dans la succession des cases mémoires de la ligne à retard est commandé par le signal d'horloge CLK.

La sortie de cette première ligne à retard 15 est reliée d'une part à l'entrée de moyens d'adaptation et d'autre part à l'entrée de moyens de convolution.

Les moyens d'adaptation comportent ici essentiellement un multiplieur 19 et un additionneur 20. Les deux registres d'entrée 19a et 19b du multiplieur 19 sont respectivement commandés par un signal d'horloge CLK et par un signal de commande CM6. Le registre 19a est relié à la sortie d'un multiplexeur 17 commandé par un signal de commande CM1, dont une entrée est reliée à la sortie de la ligne à retard 15 et dont une autre entrée est susceptible de recevoir le coefficient de gain g. En fait comme on le verra plus en détail ci-après, ce multiplexeur reçoit directement l'opposé -g de ce coefficient de gain. L'autre registre 19b du multiplieur est relié à la sortie d'un multiplexeur 18 commandé par un signal de commande CM2, dont une entrée est reliée à la sortie du multiplieur 19 et dont une autre entrée est reliée à la sortie du bloc de traitement 10 de façon à recevoir le signal d'erreur e.

La sortie du multiplieur 19 est également reliée à une entrée de l'additionneur 20 dont l'autre entrée est reliée à la sortie de la deuxième ligne à retard 22. Cette dernière est connectée en entrée, par l'intermédiaire d'un multiplexeur 21 commandé par un signal de commande CM5, d'une part à la sortie de l'additionneur 20 et d'autre part à sa propre sortie de sorte qu'elle est également susceptible d'être rebouclée sur elle-même bien que celà ne soit pas absolument nécessaire comme on le verra ci-après.

Les moyens de convolution comportent essentiellement un multiplieur 23 à deux registres d'entrée 23a et 23b commandés par le signal d'horloge CLK, ainsi qu'un additionneur 24 et un registre 25 permettant de stocker le résultat de la convolution étape après étape. L'entrée du registre 23a est reliée à la sortie de la première ligne à retard 15 tandis que l'entrée du registre 23b est reliée à la sortie des moyens d'adaptation c'est-à-dire à la sortie de l'additonneur 20.

La sortie de l'additionneur 24 est rebouclée sur l'une de ses entrées par l'intermédiaire d'un multiplexeur 26, commandé par un signal de commande CM3, et dont la sortie est reliée au registre 25. L'autre entrée de l'additionneur 24 est reliée à la sortie du multiplieur 23.

Alors qu'une autre entrée du multiplexeur 26 est susceptible de recevoir le signal Y reçu par le microphone, la sortie de l'additionneur 24 est directement relié à la sortie du bloc de traitement 10 pour délivrer le signal d'erreur e, d'une part à la voie d'émission 4 et d'autre part, à l'entrée du multiplieur 19 des moyens d'adaptation par l'intermédiaire du multiplexeur 18.

Un circuit classique de logique de commande 27 reçoit en entrée la fréquence d'horloge CLK et élabore les différents signaux de commande CM1-CM6.

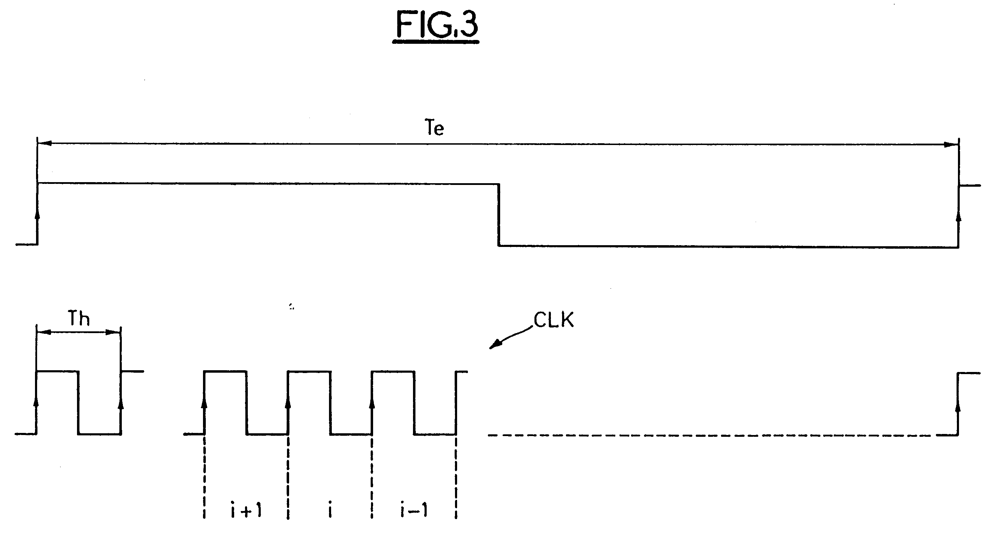

On va maintenant décrire en détail en se référant plus particulièrement aux figures 3 à 6, le fonctionnement du dispositif selon l'invention.

D'une façon générale, on effectue une modélisation mathématique H du chemin acoustique parcouru par le signal X. On calcule ensuite le scalaire $\ddot{Y}$ estimant l'écho acoustique à partir de ce modèle H et du signal reçu X puis on calcule signal d'erreur e qui est également un scalaire, par soustraction du scalaire $\ddot{Y}$ du scalaire Y représentant le signal reçu par le microphone.

Le signal X est reçu sous forme d'échantillons numérique x(t) à à des instants réguliers t multiples entiers d'une période d'échantillonnage Te correspondant à une fréquence d'échantillonnage Fe, typiquement de l'ordre de 16 KHz (62,5 micro-secondes pour Te) (figure 3).

Le filtre transversal H est caractérisé par un nombre N prédéterminé de coefficients $h_t(i)$ où i est un entier désignant un coefficient d'indice compris entre 0 et N-1. Les coefficients $h_t(i)$ avec i variant de 0 à N-1, représentent alors une réponse impulsionnelle à l'instant t, dont la convolution avec le signal X, représenté par les échantillons de celui-ci aux i instants précédents l'instant t, forme le signal d'écho estimé $\ddot{Y}$.

Le filtre transversal numérique auto-adaptatif est cadencé à une fréquence d'horloge CLK, beaucoup plus grande que la fréquence d'échantillonnage Fe, typiquement de l'ordre de 1024 fois la fréquence d'échantillonnage Fe.

A chaque instant t, séparé de l'instant précédent et de l'instant suivant par la période d'échantillonnage Te, on effectue l'acquisition d'un échantillon x(t) de signal et du scalaire Y(t). La valeur du produit de (-g) par la valeur du signal d'erreur e calculée à l'instant t-1 est stockée en "mémoire" comme on le verra ci-après. On effectue ensuite, en virgule fixe, pendant la période Te ayant débuté à l'instant t, les calculs d'adaptation et de convolution selon les deux équations données ci-dessous pour tous les indices i :

$$-h_t(i) = -h_{t-1}(i) - g\, e(t-1)\, x(t-(i+1))$$

$$-\ddot{Y}(t) = \sum_i h_t(i)\ x\ (t-i)$$

puis on détermine la valeur du signal d'erreur e à l'instant t par la somme Y(t) + (-$\ddot{Y}$(t)).

Pendant la période d'échantillonnage Te les équations d'adaptation et de convolution sont effectuées au rythme de l'horloge CLK. Comme on le verra ci-après, à chaque cycle d'horloge, de durée Th, c'est-à-dire entre deux fronts montants successifs, de celle-ci, on effectue un calcul d'adaptation d'un coefficient $h_t(i)$ du filtre et un calcul élémentaire de la convolution. Aussi à des fins de simplification, on désigne également les cycles d'horloge par les numéros d'indice i sur la figure 3.

Pratiquement, ces deux équations d'adaptation et de convolution sont exécutées de façon entrelacée suivant l'indice i décroîssant afin de minimiser les accès à la ligne à retard contenant le vecteur X et à la ligne à retard contenant le vecteur H. Pendant le cycle courant i, les équations élémentaire d'adaptation et de convolution sont données par les formules suivantes:

$$-h_t(i) = -h_{t-1}(i) - g\ e(t-1)\ x(t-(i+1))$$

$$acc = acc + (-h_t(i) \times (t-i))$$

dans laquelle la valeur acc désigne la valeur du registre 25 des moyens de convolution.

Le signal X utilisé dans la convolution est en fait un vecteur dont les composantes sont respectivement contenues dans les différentes "cases" de la ligne à retard 15. Lors de l'initialisation, toutes ces composantes sont mises à zéro. Elles seront ensuite mises à jour une à une à la fréquence d'échantillonnage Fe.

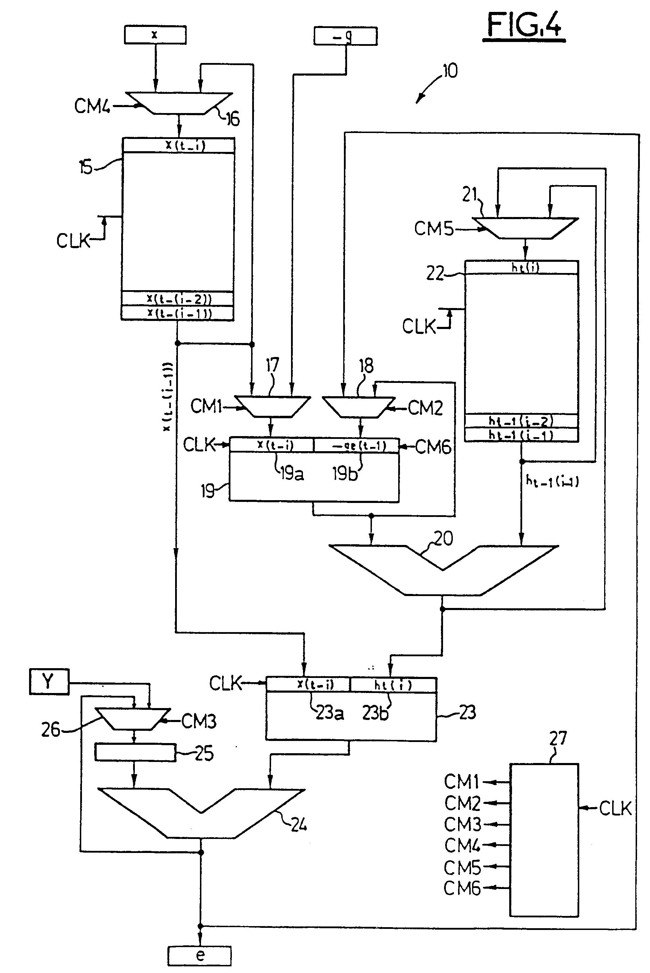

La figure 4 illustre l'état des différents registres et moyens de mémoire au début du cycle i c'est-à-dire juste après le front montant de l'horloge. La "case supérieure" de la ligne à retard 15, c'est-à-dire celle directement reliée à la sortie du multiplexeur 16 contient la valeur x(t-i) tandis que la dernière case contient la valeur x(t-(i-1)), tandis que l'avant dernière case contient la valeur x(t-(i-2)). La valeur x(t-i) est également présente dans le registre 19a du multiplieur 19 et dans le registre 23a du multiplieur 23.

Le registre 19b du multiplieur 19 contient la valeur du produit -ge(t-1). La première case d'entrée de la ligne à retard 22 contient le coefficient $h_t(i)$ tandis que la case de sortie contient le coefficient $h_{t-1}(i-1)$ et que la case précédent cette case de sortie contient le coefficient $h_{t-1}(i-2)$. Le coefficient $h_t(i)$ est également contenu dans le registre 23b du multiplieur 23.

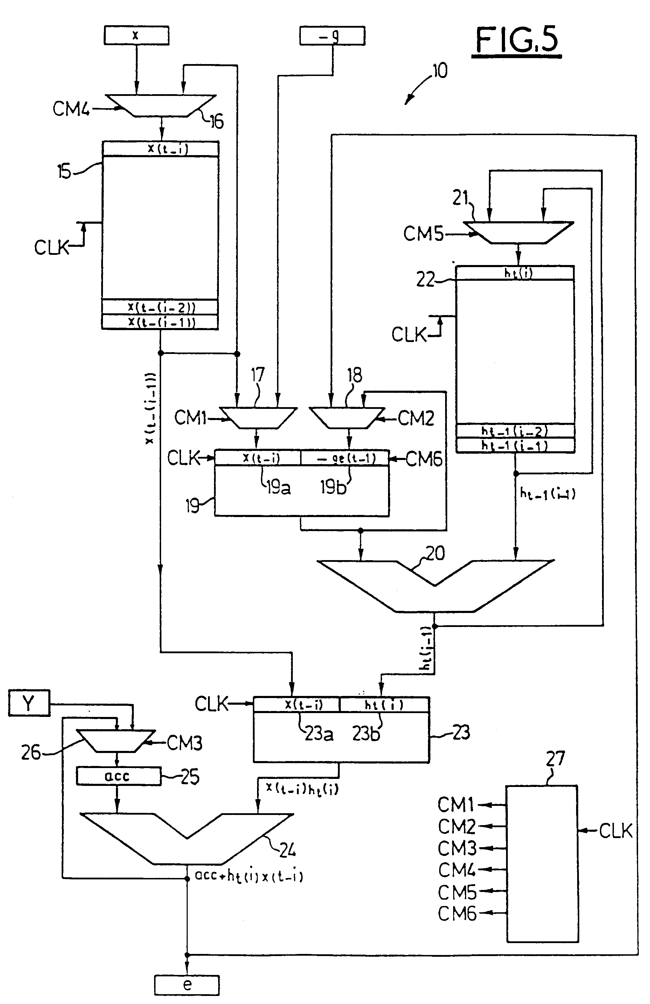

A l'issue de ce cycle i, lorsque toutes les opérations ont été effectuées, c'est-à-dire juste avant le front montant du cycle i-1, le contenu des différents registres et ligne à retard n'a pas été modifié (figure 5). Par contre, on dispose en sortie de l'additionneur 20 des moyens d'adaptation de la valeur à l'instant t du coefficient $h_t(i-1)$. Le produit élémentaire de convolution $x(t-i)h_t(i)$ est présent en sortie du multiplieur 23 et a été ajouté, en sortie de l'additionneur 24, au contenu précédent "acc" du registre 25. L'homme du métier remarque donc ici, qu'au cours d'un seul cycle d'horloge i, on a effectué à la fois une étape d'adaptation et une étape élémentaire complète de convolution. En fait, on a effectué l'étape d'adaptation du cycle i-1 puisqu'on a calculé le coefficient $h_t(i-1)$ et l'étape de convolution du cycle i. L'invention permet donc de réaliser ces deux étapes en un seul cycle d'horloge alors que dans l'état de la technique il est nécessaire de prévoir plusieurs cycles de base machine pour effectuer un cycle i. En d'autres termes on a selon l'invention, une correspondance parfaite en les cycles de base machine cadencés par l'horloge CLK, et les cycles i.

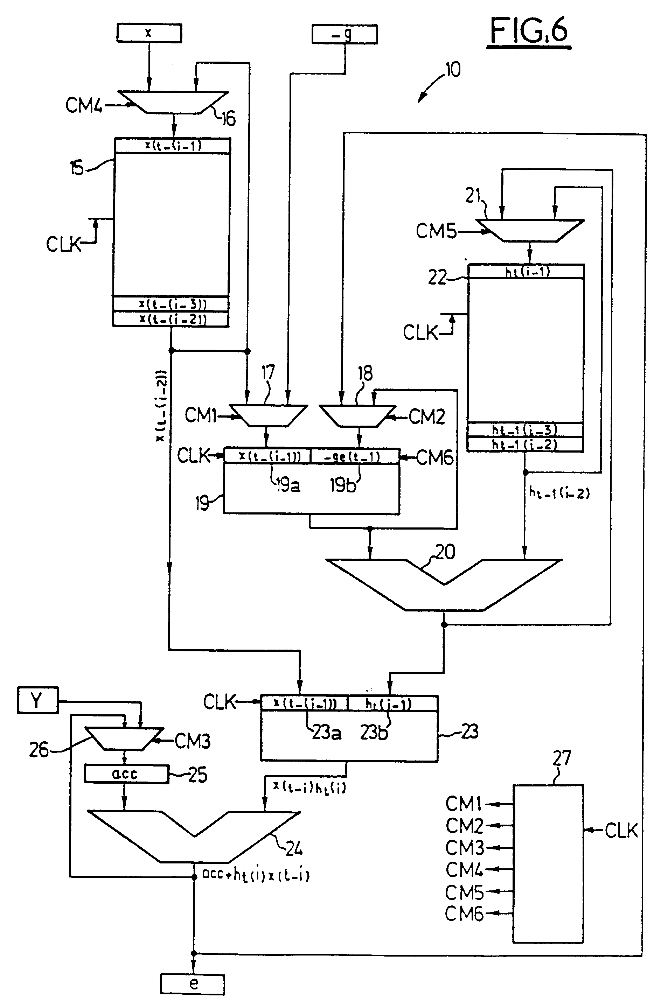

La figure 6 représente l'état des registres et des lignes à retard au début du cycle suivant c'est-à-dire au début du cycle i-1 juste après le front montant de l'horloge. De part le rebouclage sur elle-même de la ligne à retard 15, tous les échantillons contenus dans cette ligne à retard ont été décalés vers le bas et l'échantillon x(t-(i-1)) se retrouve maintenant dans la case d'entrée de cette ligne à retard 15. Il se retrouve également dans les registres 19a et 23a des deux multiplieurs 19 et 23. Le coefficient $h_t(i-1)$ qui était présent en sortie de l'additionneur 20 au cycle i se retrouve maintenant dans le registre 23b du multiplieur afin de servir à l'étape de convolution du cycle i-1, et se trouve également dans la case d'entrée de la ligne à retard 22, celle-ci ayant été également décalée par le signal d'horloge CLK.

Au rythme de la fréquence d'échantillonnage Fe, c'est-à-dire à chaque fois qu'un nouvel échantillon temporel du signal reçu sur la voie 3 se présente à l'entrée du multiplexeur 16, celui-ci est stocké dans la case d'entrée de la ligne à retard 15 et se substitue donc à l'échantillon temporel le plus ancien.

Par ailleurs, lors de l'initialisation, la valeur Y du signal reçu par le microphone a été stockée dans le registre 25. Compte tenu par ailleurs que tous les coefficients du filtre ont été initialisés à zéro et que l'on fournit au multiplieur 19 l'opposé -g de la valeur du gain, l'architecture proposée permet d'obtenir directement en sortie de l'additionneur 24 la soustraction (en fait l'addition de l'opposé de l'écho estimé) de l'écho estimé à l'écho réel. En d'autres termes, les moyens de soustraction comportent ici des éléments communs avec les moyens de convolution à savoir l'additionneur 24 et le registre 25. On réalise donc ici un gain de place supplémentaire.

Lors de l'initialisation, mais aussi à chaque instant temporel t, il est nécessaire de charger dans le registre 19b le produit du gain -g par la valeur du signal d'erreur. Ceci s'effectue en deux coups d'horloge pour successivement charger la valeur du gain et du signal d'erreur dans les registres d'entrée respectifs 19a et 19b puis pour effectuer le produit et le stockage de ce produit dans le registre 19b. Pendant ces deux coups d'horloge, on n'effectue pas de décalage des lignes à retard. Aussi, compte tenu de cette contrainte architecturale, il est nécessaire de prévoir un nombre de points de convolution, c'est-à-dire un nombre d'indices i, au plus égal au nombre de cycles d'horloge pendant une période d'échantillonnage diminué de deux. Concrètement, dans le cas présent, si l'indice i varie de 0 à 1021, en fait de 1021 à 0, on prévoira 1024 coups d'horloge par période d'échantillonnage Te. On prévoit alors une longueur de ligne à retard 22 (c'est-à-dire un nombre de cases mémoire) égale au nombre d'indices i c'est-à-dire en l'espèce 1022, et une longueur de la ligne à retard 15 égale à celle de la ligne à retard 22 augmentée d'une unité. Bien entendu, la largeur des lignes à retard, c'est-à-dire le nombre de "points mémoire" par "case" est au moins égal au nombre de bits des échantillons x et des coefficients h.

La structure proposée permet également d'effectuer la convolution sur un nombre de coefficients différent du nombre de cases mémoires de la ligne à retard 22. Dans ce cas, afin de ne pas perturber le fonctionnement du filtre, il est avantageux de reboucler la ligne à retard 22 sur elle-même, lorsque la sortie de cette dernière délivre des données contenues dans des cases non utilisées pour le traitement effectif du filtre.

L'étape d'adaptation nécessite une multiplication et une addition, un accès en lecture et en écriture d'un coefficient du filtre, et un accès en lecture d'un échantillon temporel de signal. Par ailleurs, l'étape de convolution nécessite une multiplication et une addition, un accès en lecture à un coefficient du filtre qui a été calculé à l'adaptation précédente, et un accès en lecture à un échantillon temporel de signal reçu. Donc au rythme de la fréquence d'échantillonnage Fe, il est nécessaire d'effectuer un accès successif à toutes les composantes du vecteur H en lecture et en écriture, et à toutes les composantes du vecteur X en lecture, c'est-à-dire d'effectuer une réalisation d'une fenêtre glissante sur le vecteur X. L'utilisation des lignes à retard permet de s'affranchir du calcul et du décodage des adresses inhérent aux mémoires vives classiquement utilisées. Par ailleurs l'accès séquentiel en lecture et en écriture des composantes du vecteur H s'effectue implicitement en un seul cycle machine (cycle horloge). La réalisation de la fenêtre glissante sur le vecteur X s'effectue d'une part en rebouclant la ligne à retard sur elle-même pour accéder successivement à tous les échantillons des fenêtres, et d'autre part en substituant à l'échantillon le plus ancien le nouvel échantillon à chaque nouvel instant temporel t. En d'autres termes, l'utilisation des lignes à retard dynamiques permet le décalage et le rafraîchissement simultané des données et permet donc de bénéficier des mêmes avantages fonctionnels des registres à décalage ou des mémoires vives dynamiques à double accès, mais avec un encombrement minimum.

**Revendications**

1. Procédé de traitement d'écho entre deux voies de transmission présentant entre elles un couplage, comportant la détermination d'un écho estimé à partir du signal reçu sur l'une des voies et du couplage estimé entre les voies, par un filtrage transversal numérique autoadaptatif cadencé à une fréquence d'horloge prédéterminée, caractérisé par le fait, qu'à chaque cycle d'horloge(i), on effectue à la fois un calcul d'adaptation d'un coefficient du filtre ($h_t(i)$) et un calcul élémentaire de la convolution entre le signal reçu ($x(t)$) et la réponse impulsionnelle représentée par les coefficients du filtre.

2. Dispositif de traitement d'écho entre deux voies de transmission présentant entre elles un couplage, comportant des moyens de filtrage transversal numérique auto-adaptatif (14) aptes à délivrer un écho estimé ($\ddot{Y}$) à partir du signal reçu (X) sur l'une des voies (3) et du couplage estimé (H) entre les voies, caractérisé par le fait qu'il comporte un premier moyen de mémoire à accès séquentiel simultané en écriture et en lecture (15), rebouclé sur lui-même, apte à stocker les échantillons temporels de signal reçu ($x(t)$) et un deuxième moyen de mémoire à accès séquentiel simultané en écriture et en lecture (22) apte à stocker les coefficients temporels du filtre ($h_t(i)$),

   par le fait que les moyens de filtrage (14) comprennent

   - des moyens d'adaptation (19, 20) des coefficients du filtre comportant un premier multiplexeur (17) dont une entrée est reliée à la sortie du premier moyen de mémoire (15) et dont une autre entrée est apte à recevoir un coefficient de gain (-g), un deuxième multiplexeur (18) dont une première entrée est reliée à la sortie d'un multiplieur (19), les deux entrées du multiplieur étant reliées aux deux sorties des premier et deuxième multiplexeurs, ainsi qu'un additionneur (20) dont les deux entrées sont respectivement reliées à la sortie du multiplieur (19) et à la sortie du deuxième moyen de mémoire (22), la sortie de l'additionneur (20) formant la sortie des moyens d'adaptation, ainsi que
   - des moyens de convolution comportant un multiplieur (23) relié en entrée à la sortie du premier moyen de mémoire (15) et à la sortie des moyens d'adaptation (19, 20), et un additionneur (24) connecté entre la sortie du multiplieur (23) et une deuxième entrée du deuxième multiplexeur (18) des moyens d'adaptation, la sortie de l'additionneur (24) formant la sortie des moyens de convolution,

   par le fait qu'il comporte des moyens de soustraction (25, 24) entre l'écho réel (Y) et l'écho estimé ($\ddot{Y}$), aptes à délivrer un signal d'erreur (e), la sortie des moyens de soustraction étant reliée à l'entrée des moyens d'adaptation et par le fait que les moyens d'adaptation, de convolution, de soustraction ainsi que les deux moyens de mémoire sont commandés au rythme d'un même signal d'horloge (CLK).

3. Dispositif selon la revendication 2, caractérisé par le fait que les moyens de soustraction et les moyens de convolution comportent des éléments communs (24, 25) formés d'un additionneur (24) et d'un registre (25).

4. Dispositif selon la revendication 3, caractérisé par le fait que les moyens de soustraction comportent, outre l'additionneur (24) des moyens de convolution, un multiplexeur (26) dont une entrée est reliée à la sortie de l'additionneur (24) des moyens de convolution et dont une autre entrée est apte à recevoir l'écho réel (Y), ainsi qu'un registre (25) disposé entre la sortie du multiplexeur (26) et une entrée de l'additionneur (24) des moyens de convolution.

5. Dispositif selon l'une des revendications 2 à 4, caractérisé par le fait que le deuxième moyen de mémoire(22) est rebouclable sur lui-même.

6. Dispositif selon la revendication 5, caractérisé par le fait que la sortie du deuxième moyen de mémoire est rebouclable par l'intermédiaire d'un multiplexeur (21) connecté par ailleurs en entrée à la sortie de l'additionneur (20) des moyens d'adaptation.

7. Dispositif selon l'une des revendications 2 à 6, caractérisé par le fait qu'il est prévu un multiplexeur (16) dont une entrée est apte à recevoir les échantillons temporel (x(t)) successifs du signal reçu et dont une autre entrée est reliée à la sortie du premier moyen de mémoire (15).

8. Dispositif selon l'une des revendications 2 à 7, caractérisé par le fait que la longueur du premier moyen de mémoire (15) est supérieure à celle du deuxième moyen de mémoire (22).

9. Dispositif selon l'une des revendications 2 à 8, caractérisé par le fait que les moyens de mémoire à accès séquentiel sont des lignes à retard dynamiques.

**Claims**

1. Method of echo processing between two transmission pathways exhibiting coupling there-between, comprising the determination of an echo estimated on the basis of the signal received on one of the pathways and of the estimated coupling between the pathways, by self-adaptive digital transverse filtering regulated by a predetermined clock frequency, characterized in that, at each clock cycle (i) both a calculation for adapting a coefficient of the filter ($h_t(i)$) and an elementary calculation of the convolution between the signal received (x(t)) and the impulse response represented by the coefficients of the filter are performed.

2. Device for echo processing between two transmission pathways exhibiting a coupling there-between, comprising self-adaptive digital transverse filtering means (14) able to deliver an estimated echo ($\ddot{Y}$) on the basis of the signal received (X) on one of the pathways (3) and of the estimated coupling (H) between the pathways, characterized in that it comprises a first memory means with simultaneous sequential write and read access (15), looped back on itself, able to store the temporal samples of signal received (x(t)) and a second memory means with simultaneous sequential write and read access (22) able to store the temporal coefficients of the filter ($h_t(i)$),

in that the filtering means (14) comprise

- means (19, 20) for adapting the coefficients of the filter comprising a first multiplexer (17), one input of which is connected to the output of the first memory means (15) and another input of which is able to receive a gain coefficient (-g), a second multiplexer (18), a first input of which is connected to the output of a multiplier (19), the two inputs of the multiplier being connected to the two outputs of the first and second multiplexers, as well as an adder (20) whose two inputs are respectively connected to the output of the multiplier (19) and to the output of the second memory means (22), the output of the adder (20) forming the output of the adaptation means, as well as

- convolution means comprising a multiplier (23) connected at input to the output of the first memory means (15) and to the output of the adaptation means (19, 20), and an adder (24) linked between the output of the multiplier (23) and a second input of the second multiplexer (18) of the adaptation means, the output of the adder (24) forming the output of the convolution means,

in that it comprises means of subtraction (25, 24) between the real echo (Y) and the estimated echo ($\ddot{Y}$), which are able to deliver an error signal (e), the output of the subtraction means being connected to the input of the adaptation means and in that the adaptation, convolution, subtraction means as well as the two memory means are controlled at the rate of one and the same clock signal (CLK).

3. Device according to Claim 2, characterized in that the subtraction means and the convolution means comprise common elements (24, 25) formed of an adder (24) and of a register (25).

4. Device according to Claim 3, characterized in that the subtraction means comprise, apart from the adder (24) of the convolution means, a multiplexer (26), one input of which is connected to the output of the adder (24) of the convolution means and another input of which is able to receive the real echo (Y), as well as a register (25) disposed between the output of the multiplexer (26) and an input of the adder (24) of the convolution means.

5. Device according to one of Claims 2 to 4, characterized in that the second memory means (22) can be looped back on itself.

6. Device according to Claim 5, characterized in that the output of the second memory means can be looped back by way of a multiplexer (21) linked moreover at input to the output of the adder (20) of the adaptation means.

7. Device according to one of Claims 2 to 6, characterized in that there is provided a multiplexer (16), one input of which is able to receive the successive temporal samples (x(t)) of the signal received and another input of which is connected to the output of the first memory means (15).

8. Device according to one of Claims 2 to 7, characterized in that the length of the first memory means (15) is greater than that of the second memory means (22).

9. Device according to one of Claims 2 to 8, characterized in that the memory means with sequential access are dynamic delay lines.

**Patentansprüche**

1. Verfahren zur Verarbeitung von Echosignalen zwischen zwei Übertragungswegen mit gegenseitiger Kopplung, welches die Bestimmung eines Echosignals umfasst, das ausgehend von einem über einem der Wegen erhaltenen Signals und der zwischen den Wegen geschätzten Kopplung geschätzt wird, wobei die Bestimmung durch eine mit einer vorbestimmten Taktfrequenz getaktete transversale, digitale, adaptive Filterung erfolgt, dadurch gekennzeichnet, dass

bei jedem Taktzyklus (i) zugleich eine Berechnung der Adaptation eines Filterkoeffizienten ($h_t$(i)) und eine grundsätzliche Berechnung der Faltung zwischen dem erhaltenen Signal (x(t)) und der durch die Filterkoeffizienten dargestellten Impulsantwort durchgeführt wird.

2. Vorrichtung zur Verarbeitung von Echosignalen zwischen zwei Übertragungswegen mit gegenseitiger Kopplung, mit

einer Einrichtung (14) zur transversalen, digitalen, adaptiven Filterung, die zur Ausgabe eines Echosignals (ÿ) geeignet ist, das ausgehend von dem über einen der Wege (3) erhaltenen Signal (X) und der zwischen den Wegen geschätzten Kopplung (H) geschätzt wird, dadurch gekennzeichnet, dass die Vorrichtung eine erste Speichereinrichtung (15) für einen sequentiellen, gleichzeitig erfolgenden Schreib- und Lese-Zugriff, die auf sich selbst rückgekoppelt ist, welche die zeitlichen Abtastwerte des erhaltenen Signals (x(t)) speichern kann, und eine zweite Speichereinrichtung (22) für einen sequentiellen, gleichzeitig erfolgenden Schreib- und Lese-Zugriff, welche temporäre Filterkoeffizienten ($h_t$(i)) speichern kann, umfasst und dadurch gekennzeichnet, dass die Einrichtung zur Filterung (14) folgende Mittel aufweist:

- Mittel zur Adaptation (19, 20) der Filterkoeffizienten, mit

einem ersten Multiplexer (17) dessen einer Eingang an den Ausgang der ersten Speichereinrichtung (15) angeschlossen ist, und dessen anderer Eingang zum Empfang eines Verstärkungsfaktors (-g) geeignet ist, einem zweiten Multiplexer (18) dessen einer Eingang an den Ausgang eines Multiplizierers (19) angeschlossen ist, wobei die beiden Eingänge des Multiplizierers an die beiden Ausgänge des ersten und zweiten Multiplexers angeschlossen sind, und mit einem Addierer (20) dessen zwei Eingänge entsprechend an den Ausgang des Multiplizierers (19) und an den Ausgang der zweiten Speichereinrichtung (22) angeschlossen sind, wobei der Ausgang des Addierers (20) den Ausgang der Adaptationsmittel bildet, und

- Mittel zur Faltung, welche

einen Multiplizierer (23) umfassen, der am Eingang

an den Ausgang der ersten Speichereinrichtung (15) und an den Ausgang der Adaptationsmittel (19, 20) angeschlossen ist, und

einen zwischen den Ausgang des Multiplizierers (23) und einen zweiten Eingang des zweiten Multiplexers (18) der Adaptationsmittel geschalteten Addierer (24), wobei der Ausgang des Addierers (24) den Ausgang der Faltungsmittel bildet, und dadurch gekennzeichnet, dass die Vorrichtung

Einrichtungen (25, 24) zur Differenzbildung zwischen dem tatsächlichen Echosignal (y) und dem geschätzten Echosignal (ÿ) umfasst, die zur Ausgabe eines Fehlersignals (e) geeignet sind, wobei der Ausgang der Einrichtungen zur Differenzbildung an den Eingang der Adaptationsmittel angeschlossen ist, und dadurch, dass die Adaptationsmittel, die Faltungsmittel, die Einrichtungen zur Differenzbildung und die zwei Speichereinrichtungen im Takt eines gleichen Taktsignals (CLK) angesteuert werden.

3. Vorrichtung gemäß Anspruch 2, dadurch gekennzeichnet, dass die Differenzbildungseinrichtungen und die Faltungsmittel gemeinsame Elemente (24, 25) aufweisen, die aus einem Addierer (24) und einem Register (25) bestehen.

4. Vorrichtung gemäß Anspruch 3, dadurch gekennzeichnet, dass die Differenzbildungseinrichtungen ausser dem Addierer (24) der Faltungsmittel einen Multiplexer (26), dessen einer Eingang an den Ausgang des Addierers (24) der Faltungsmittel angeschlossen ist und dessen anderer Eingang zum Empfang des tatsächlichen Echosignals (y) geeignet ist, und ein Register (25) umfasst, welches zwischen dem Ausgang des Multiplexers (26) und einem Eingang des Addierers (24) der Faltungsmittel angeordnet ist.

5. Vorrichtung gemäß einem der Ansprüche 2 bis 4, dadurch gekennzeichnet, dass die zweite Speichereinrichtung (22) auf sich selbst rückkoppelbar ist.

6. Vorrichtung gemäß Anspruch 5, dadurch gekennzeichnet, dass der Ausgang der zweiten Speichereinrichtung mittels eines Multiplexers (21), der zudem am Eingang an den Ausgang des Addierers (20) der Adapatationsmittel angeschlossen ist, auf sich selbst rückkoppelbar ist.

7. Vorrichtung gemäß einem der Ansprüche 2 bis 6, dadurch gekennzeichnet, dass ein Multiplexer (16) vorgesehen ist, dessen einer Eingang geeignet ist, aufeinanderfolgende zeitliche Abtastwerte (x(t)) des erhaltenen Signals zu empfangen, und dessen anderer Eingang an den Ausgang der ersten Speichereinrichtung (15) angeschlossen ist.

8. Vorrichtung gemäß einem der Ansprüche 2 bis 7, dadurch gekennzeichnet, dass die Länge der ersten Speichereinrichtung (15) größer ist als die der zweiten Speichereinrichtung (22).

9. Vorrichtung gemäß einem der Ansprüche 2 bis 8, dadurch gekennzeichnet, dass die Speichereinrichtung zum sequentiellen Zugriff dynamisch verzögerte Leitungen sind.

## FIG.1

EP 0 615 374 B1

## FIG.2

# FIG.3

EP 0 615 374 B1

# FIG.4

FIG.5

FIG.6

# FIG.7

BUS LECTURE

BUS ECRITURE